**Europäisches Patentamt**

**European Patent Office**

**Office européen des brevets**

(11) Publication number: **0 252 260**
**A1**

## (12) EUROPEAN PATENT APPLICATION

(21) Application number: **87107423.3**

(22) Date of filing: **21.05.87**

(51) Int. Cl.⁴: **C02F 11/14 , C02F 1/52**

(30) Priority: **23.05.86 JP 118562/86**

(43) Date of publication of application:
**13.01.88 Bulletin 88/02**

(84) Designated Contracting States:
**CH DE FR LI**

(71) Applicant: **Kamachi, Yasushi**
**Chatelet N 202 1-20-13, Kitamachi**
**Warabi-shi Saitama-ken(JP)**

Applicant: **The Sun Co., Ltd.**
**6-19-601, Takaban 1-chome Meguro-ku**
**Tokyo(JP)**

Applicant: **Ono, Shoji**
**24-17, Nishiazabu 3-chome Minato-ku**
**Tokyo(JP)**

Applicant: **Sakakibara, Terumi**
**53-4-201, Toyogaoka 1-chome**
**Tama-shi Tokyo(JP)**

(72) Inventor: **Yasushi, Kamachi**
**Chatelet N 202, 1-20-13 Kitamachi**
**Warabi-shi Saitama-ken(JP)**

(74) Representative: **Geyer, Ulrich F., Dr.**
**Dipl.-Phys. et al**
**WAGNER & GEYER Patentanwälte**
**Gewuerzmuehlstrasse 5 Postfach 246**
**D-8000 München 22(DE)**

(54) **Chemical agent for making sludge or mud particles hydrophobic.**

(57) A chemical agent for making sludge or mud particles hydrophobic is based on the use of iron (II) salts (ferrous salts) or iron (III) salts (ferric salts), trivalent metallic salts, and monovalent metallic salts. The balance is an aqueous solvent having a weight which is six to seven times as great as the total weight of the essential components dissolved in the solvent.

## CHEMICAL AGENT FOR MAKING SLUDGE OR MUD PARTICLES HYDROPHOBIC

### 2. BACKGROUND OF THE INVENTION:

#### (FIELD OF THE INVENTION)

The present invention relates to a sludge or mud treating agent for treating a sludge and muddy water, the sludge and muddy water including various deposits which are at the bottoms of the lakes, marshes, rivers or seas, suspension muds which are suspended in a body of water, etc., to separate a water therefrom, the remainder being modified into solid matter containing almost no water.

#### (DESCRIPTION OF THE PRIOR ART)

With centralization of the production activities as well as an increase in the population, the lakes, marshes, rivers or seas involved have progressively been polluted, which has at present raised a serious social problem. Starting with accumulation there of the sludge which does harm to preserving the environment, such pollution makes the waters progressively "fertile" to spread more and more widely. For this reason, the disposition of the sludge is indispensable to improvement in the environment.

The dispositions of sludge can roughly be classified into disposition by removal wherein the sludge accumulated is dredged for removal, and disposition by confinement wherein the sludge is confined in a state wherein it is accumulated.

The disposition by removal includes the technique of allowing the sludge and muddy water as landed to be subjected to natural precipitation and desiccation in the sun, and the technique of extracting water from such sludge and muddy water by use of a hydro-extractor. The former technique requires the use of a large place of disposition where the sludge and muddy water are received or accommodated. It is, however, difficult to ensure the procurement of such a place in our small country. Even if such a place were obtained, difficulties would be encountered in taking the perfect countermeasures against emission of malordor, sludge, muddy water, etc.

On the other hand, the latter technique requires pretreatments to be carried out which comprises the precipitating, thickening, digesting and tempering steps. Further, after hydro-extraction, the remaining sludge substance i.e., dehydrated cake comes to have a water content of 80 to 90% at best. For this reason, the dehydrated cake must be subjected to post-treatments which comprises the desiccating, incinerating and disposing steps. In addition, since the water as separated is a muddy water which contains a large amount of fine particles having theretofore constituted the sludge, it becomes also necessary to carry out a post-treatment therefor. Large-scale installations and facilities thus become necessary for treating and disposing a large amount of sludge and muddy water over a wide range of areas.

The confinement disposition is a technique which is directed to covering the upper surface of the accumulated sludge with an earth, sand, or concrete, of good quality. Since this confinement disposition is executed in a body of water, it has an adverse effect of causing a muddy water to be newly produced and enlarged in the scope. This widely spreads the pollution. This technique, therefore, is unsuitable for disposition of sludge over a wide range of areas. Further, this technique covers the upper surface of sludge at the bottom of a body of water, which promotes the destruction of the biological system. In particular, the disposition by confinement has a serious drawback in that it is impossible to dispose a muddy water. The disposition by removal would be more practical, in this regard.

The reason why the disposition by removal involves the problems or drawbacks is that a large number of hydrophilic colloids are contained in the sludge. For this reason, the sludge has a high water retention characteristic. That is, the water contained therein is unlikely to separate. Therefore, the sludge is difficult to treat for disposition.

In general, sludge consists mainly of organic matters such as protein, carbohydrate, fatty acid, hydrocarbon, etc., and is constituted by fine particles having a diameter ø expressed in terms of micron, or a diameter ø larger than this, and by fine organic particles having a diameter expressed in terms of angstrom. These fine organic particles are in the form of colloids in bodies of water such as the lakes and marshes. They usually are negatively charged. Most of them are hydrophilic while a part thereof is hdyrophobic.

The hydrophilic nature of fine organic particles means that water molecules are caused to attach onto each fine particle as if it were covered with a "shell" of water, the water molecules being made inseparable from the particle of the same. The particles which have been kept in such a state will hereinafter be referred to as "hydrophilic particles". On the other hand, the hydrophobic nature of fine organic particles means that water molecules are not restrained by, and are freely separable from, the particles. The particles in such a state will hereinafter be referred to as "hydrophobic particles".

The fine particles which are large in mass are naturally precipitated and thus are piled up over the bottom of a body of water to form a layer of sludge. The fine particle which are small in mass, on the other hand, are not precipitated but are suspended at all times. One of the reasons therefor is thought to be that a plurality of hydrophilic particles attach onto a hydrophobic particle as if they carry the latter therebetween, thereby preventing the latter from being precipitated. A second reason is thought to be that the hydrophobic particles which are electrically charged with the same polarity (negative) repel each other, whereby they are kept in dispersion.

### 3. SUMMARY OF THE INVENTION:

Accordingly, the object of the present invention is to provide an agent for treating sludge consisting mainly of organic matters, which is intended to make the sludge or mud particles hydrophobic.

According to the present invention, there is provided a chemical agent for making sludge or mud particles hydrophobic, which consists essentially of an iron (II) salt (ferrous salt) or iron (III) salt (ferric salt), a trivalent metallic salt, and monovalent metallic salt, the balance being an aqueous solvent having a weight which is six to seven times as great as the total weight of the essential components dissolved in the solvent.

The main components of the present chemical agent are inorganic metallic salts which are positively electrically charged. The main components are introduced into a mass of sludge which then is stirred and then is allowed to stand. As a result, the positively charged inorganic metallic salts and the negatively charged fine particles constituting the sludge collide, and are united, with each other due to the electrostatic action of mutual attraction therebetween which occurs due to their electric charges with different polarities. At this time, the "shell" of water molecules which have attached onto the hydrophilic particles is destroyed with the result that the water molecules having been bound on the hydrophilic particles become a free water to go into the aqueous solvent (water in the lakes, marshes, rivers, seas, etc.). Thus, the hydrophilic particles are made hydrophobic to become hydrophobic particles. At the same time, the hydrophobic particles thus converted from the hydrophilic particles and the hydrophobic particles (as negatively charged) kept hydrophobic from the outset are electrically neutralized by being brought into unison with the positively charged fine particles (inorganic metallic salts), thus losing their charges. The fine particles which have lost their charges come to have a tendency to adsorb each other (the reason for this is not made clear).

Owing to this mutually adsorbing action, the fine particles having theretofore been dispersed by way of mutual repulsion due to their having the same polarity gradually are united with each other and grow up into particles larger in mass (aggregation/agglomeration reaction).

When the particles grow up until their mass becomes larger than that corresponding to the buoyancy and upward convection of water, they start to precipitate to become a precipitated matter made up of an aggregation of hydrophobic particles.

Even after precipitation, the action of mutual adsorption between the particles (aggregation/agglomeration action) continues to proceed. Therefore, the water molecules which exist among the fine particles in the form of a free water undergo the compression and are expelled. Thus, the precipitate gradually becomes a firm cake.

When no precipitation phenomena come to occur, the supernatant liquid becomes clear to such an extent that no matter contained therein can be observed with the naked eyes.

After removal of this supernatant liquid, when the precipitate is allowed to stand as it is, it changes into a dry mass of precipitate in approximately 24 hours. The reason why the precipitate is quickly dried is because, in addition to spontaneous evaporation of water contained therein, the said action of mutual adsorption (aggregation/agglomeration action) still continues to work between the particles constituting the mass of precipitation, whereby the water molecules are compelled to be expelled.

### 4. DESCRIPTION OF THE PREFERRED EMBODIMENT:

The chemical agent for making sludge or mud particles hydrophobic in accordance with the invention consists essentially of an iron (II) salt (ferrous salt) or an iron (III) salt (ferric salt), a trivalent metallic salt and a monovalent metallic salt.

The iron (II) salts (ferrous salts) employed in the present invention include, for example, $FeSO_4$. The iron (III) salts (ferric salts) employed include, for example, $FeCl_3$, $Fe_2(SO_4)_3$, a mixture of $FeCl_3$ and $Fe_2(SO_4)_3$, or high polymeric iron salts. The trivalent metallic salts employed include salt of aluminium, i.e., $Al_2(SO_4)_3$. The monovalent metallic salts employed include potassium salt, i.e., $KCl$.

The above salts are dissolved into an aqueous solvent having a weight which is six to seven times as great as the total weight of such salts, to obtain the present chemical agent. It is to be noted here that monovalent/trivalent aluminum and potassium salt ($KAl(SO_4)_2$) may be added to the above main components.

The main components are blended at a suitable blending ratio conforming to the proportion of a sludge to be treated. In this case, it is possible that the blending proportion of each salt varies to an extent of about 40%.

For instance, the reference blending proportion of the components of the present chemical agent in relation to the sludge in the Kasumigaura Lagoon is as follows.

Components Required For Producing One Liter of The Present Chemical Agent
Iron salt -------46%, about 66g
Aluminum salt ---31%, about 44g
Potassium salt --16%, about 23g
Aluminum and
Potassium salt --7%, about 10g

The method of using the present chemical agent is simply to first introduce the agent of suitable quantity into a body of sludge and muddy water and then stir the resulting body.

In the case of, for example, a body of muddy water having a mud concentration of 30%, the present agent of 4.5 *l* is introduced per cubic meter of the muddy water and, thereafter, the resulting body has only to be stirred for approximately 30 seconds. After agitation, the body simply is allowed to stand, during which period the above-mentioned aggregation/agglomeration reaction occurs to cause an expelling of the water molecules in the mud.

To make the present chemical agent of the invention more effective, it is preferable to employ as ancillaries thereto cationic high polymeric substance, calcium hydroxide, anionic high polymeric substance and the like.

To say further in relation to the above examples, firstly, the cationic high polymeric substance of about 2.5 *l* is introduced with a subsequent stirring of approximately 30 seconds. The substance is added for the following reasons. Namely, the fine particles in the sludge may include ones which are difficult to react with the positively charged metallic salts. The cationic high polymeric substance or agent easy to react with such possible particles, therefore, is added before the present chemical agent is introduced, thereby making such particles hydrophobic. Thus, with subsequent addition of the present chemical agent, it is possible to cause it to act on the whole negatively charged fine particles.

Next, the present chemical agent of about 4.5 *l* is actually introduced with subsequent stirring of approximately 30 seconds. By addition of both the cationic high polymeric agent and the present chemical agent, the aggregation/agglomeration reaction starts to take place.

Subsequently, the calcium hydroxide of about 360 grams is introduced and then the resulting muddy water is agitated for approximately thirty (30) seconds. The calcium hydroxide is added for the reason that, since addition of the positively charged metallic salts raises the hydrogen ion concentration (decreases the value of pH) in the water, addition of calcium hydroxide is intended to lower the hydrogen ion concentration (increase the value of pH), so that the reaction may take place smoothly.

Finally, the anionic high polymeric agent of about 2.9 *l* is introduced with subsequent stirring of approximately thirty (30) seconds. With addition of the anionic high polymeric agent, the agglomerated floc becomes large in size to accelerate the vecolicty with which the particles are precipitated.

The use of chemical agent for making sludge hydrophobic in accordance with the present invention sufficiently serves the purpose through mere introduction, in suitable amount, of such chemical agent into a sludge or muddy water. For this reason, it is possible with high efficiency to treat and bispose a huge amount of sludge or muddy water by use of simple facilities and through simple operations.

In the case of treating and disposing a massive sludge in particular, the sludge and muddy water are sucked up by means of a suction pump and are led, by way of pipes, to a destination (the place where the sludge and muddy water are disposed). During the conveyance, the present chemical agent of suitable amount is added into the fluid in the pipes while the density of the sludge and muddy water therein is being measured. Whereby, agitation naturally occurs within the pipes. Therefore, only if the sludge and muddy water, thereafter, are allowed to stand in the place of disposition, the above-mentioned aggregation and agglomeration reaction will proceed. In this case, if the place of disposition is a large space of ground, then the operations will become easier to carry out.

Because, the water content is absorbed due to natural filtering action of the ground, the remainder alone being left on the surface of the same. Although the remainder still contains a large amount of water, the particles constituting the remainder have no water retention power and therefore have a high tendency to undergo hydro-extraction because they are hydrophobic particles as aggregated. Further, the aggregation/agglomeration reaction proceeds without intermission insofar as they have water contained therein. For this reason, the water molecules which exist among them are expelled due to compression. Eventually, the remainder mass changes into a solid lump within approximately one day. The solid lump at this time is one which has become solid and firm as if an ordinary mud dries to become solid and firm, the hardness of such lump being higher than that of such an ordinary dried mud.

This aggregation/agglomeration reaction attributable to the addition of the present chemical agent continues to proceed so long as the particles have their water content. Therefore, the solid lump becomes, in several days, a dry and firm lump of hydrophobic nature.

Further, since the present chemical agent acts to make the hydrophilic particles hydro phobic particles, even a further addition of water to the remainder mass thus modified into a solid matter would result in extraction and expulsion of such additional water. Thus, the resulting remainder mass becomes a soil of good quality which can also be used as a reclaiming material or as a soil material for use on fields. Particularly, when this remainder soil is used for fields, its characteristic of expulsion of water makes it possible not only to improve the air permeability in the soil but also to act as organic fertilizer to promote the growth of plants. Thus, it can effectively be utilized as a soil improver.

As has been described above, the present invention provides a chemical agent which consists essentially of an iron (II) salt (ferrous salt) or iron (III) salt (ferric salt), trivalent metallic salt, and a monovalent metallic salt, the balance being an aqueous solvent having a weight six to seven times as great as the total weight of the essential components dissolved therein. Therefore, through a mere execution of very simple operations of introducing such agent into organic sludge and muddy water, the hydrophilic particles therein can be made hydrophobic to easily separate the object mass into water and solid matter. Therefore, the present invention provides a higher operating efficiency than in the prior art. In addition, mere preparation of very simple installations and facilities makes it possible to conduct massive treatment and disposition of the sludge and muddy water.

Further, there is no risk of secondary public nuisance such as water pollution, malodor generation of sludge reproduction arising from the treatment and disposition of the sludge and muddy water.

Further, since the final solid matter product constituting the remainder is an aggregation of hydrophobic particles, it can not only be reused as a soil material of good quality but also be used as organic fertilizer.

Further, since the supernatant liquid becomes a water which is clear to such an extent as the substance contained therein could not be visually observed, it can intact be returned to the lakes, marshes, rivers, or seas. Besides, it can also be made readily available as water resources for use in a water supply installation.

Furthermore, the components of the present chemical agent are safe and cheap substances and yet require the use of no special facility for treatment, the solid matter as the remainder and the water produced can be reused. Therefore, the present chemical agent provides many advantages as viewed from the standpoint of economy.

## Claims

1) An agent for making sludge or mud particles hydrophobic, consisting essentially of an iron (II) salt (ferrous salt) or an iron (III) salt (ferric salt), a trivalent metallic salt, and a monovalent metallic salt, the balance being an aqueous solvent having a weight which is six to seven times as great as the total weight of said essential components dissolved in said aqueous solvent.

## DOCUMENTS CONSIDERED TO BE RELEVANT

EP 87107423.3

| Category | Citation of document with indication, where appropriate, of relevant passages | Relevant to claim | CLASSIFICATION OF THE APPLICATION (Int. Cl.4) |
|---|---|---|---|
| A | <u>DE - A1 - 3 004 825</u> (BAYER)<br>* Claims 1,2 *<br>-- | 1 | C 02 F 11/14<br>C 02 F 1/52 |
| A | <u>AT - B - E 16 172</u> (BOLIDEN)<br>* Claims 1,3 *<br>-- | 1 | |
| A | <u>US - A - 4 257 898</u> (MEURER)<br>* Abstract *<br>---- | 1 | |

**TECHNICAL FIELDS SEARCHED (Int. Cl.4)**

C 02 F

The present search report has been drawn up for all claims

| Place of search | Date of completion of the search | Examiner |
|---|---|---|
| VIENNA | 22-09-1987 | WILFLINGER |